# EUROPEAN PATENT APPLICATION

(11) **EP 4 797 350 A1**
(43) Date of publication of application: **26.08.2026**
(21) Application number: 24891659.5
(22) Date of filing: 17.10.2024
(51) Int. Cl.: H01M 4/36, H01M 4/48, H01M 4/134, H01M 10/052, H01M 4/02

(54) **SILICON NEGATIVE ELECTRODE ACTIVE MATERIAL, NEGATIVE ELECTRODE, AND SECONDARY BATTERY COMPRISING SAME**

(30) Priority: 15.11.2023 KR 20230158388
(71) Applicant: Dongjin Semichem Co., Ltd., Incheon 22824 (KR)
(72) Inventor: LEE, Soo Yeon, Hwaseong-si, Gyeonggi-do 18635 (KR); YANG, Hwi Chan, Hwaseong-si, Gyeonggi-do 18635 (KR); LEE, Joo Cheol, Hwaseong-si, Gyeonggi-do 18635 (KR); NAM, Jae Bin, Hwaseong-si, Gyeonggi-do 18635 (KR); LIM, Hyung Woo, Hwaseong-si, Gyeonggi-do 18635 (KR); LEE, Min Young, Hwaseong-si, Gyeonggi-do 18635 (KR)
(74) Representative: Grünecker Patent- und Rechtsanwälte PartG mbB
(86) International application number: PCT/KR2024/015714
(87) International publication number: WO 2025/105712

(57) **Abstract**

Disclosed is a silicon negative electrode active material for improving the electrochemical performance of a secondary battery. According to an aspect of the present invention, provided is a silicon negative electrode active material comprising silicon particles and a carbon material on the silicon particles, wherein the carbon content ratio (C₀) of the silicon negative electrode active material satisfies Expression 1 below. [Equation 1]: 20 wt%≤C₀={B/(A+B)}x100≤60 wt% In Expression 1, A is the silicon content in the silicon negative electrode active material, and B is the carbon content in the silicon negative electrode active material.

## Description

### [Technical Field]

The present disclosure relates to a silicon negative electrode active material, and more specifically, relates to a silicon negative electrode active material, a negative electrode, and a secondary battery comprising the same.

### [Background Art]

Due to rapid growth of a secondary battery market, demand for a high-capacity battery has surged, and due to this, demand for a material of a silicon negative electrode active material capable of theoretically yielding high capacity is surging. However, during charging/discharging of the secondary battery, physical cracking due to volume expansion of the silicon negative electrode active material and a side reaction due to this occur, so there was a difficulty in manifesting performance as much as theoretical capacity. In addition, due to detachment of the silicon negative electrode active material with respect to a current collector, the negative electrode is destroyed, so there was a limitation in not being able to exhibit high cycle characteristics.

In order to prevent the physical cracking due to the volume expansion of the silicon negative electrode active material, a method of adjusting a size of silicon particles to 150 nm or less was employed. However, in synthesizing the silicon particles at nanoscale, there was a problem that mass production was difficult, and to solve this, a technology of pulverizing a silicon mineral to make it to a level of 150 nm or less was introduced. However, for a method of simply pulverizing a primary particle size to 150 nm or less, as a specific surface area becomes too high, problems occurred in which initial capacity decreases and adhesion with an electrode is difficult.

### [Disclosure]

### [Technical Problem]

According to one aspect of the present disclosure, there is provided a silicon negative electrode active material in which volume expansion due to insertion/extraction of lithium ions during a charging/discharging process of a secondary battery is effectively suppressed.

According to another aspect of the present disclosure, there is provided a silicon negative electrode active material capable of improving electrochemical performance such as initial coulombic efficiency, specific capacity, and capacity retention of a secondary battery.

According to another aspect of the present disclosure, there is provided a manufacturing method of a silicon negative electrode active material capable of effectively controlling carbon content.

According to another aspect of the present disclosure, there is provided a negative electrode capable of effectively suppressing a side reaction between an electrolyte and a negative electrode.

According to another aspect of the present disclosure, there is provided a secondary battery having excellent cycle performance.

The objects of the present disclosure are not limited to the above-mentioned objects, and other objects and advantages of the present disclosure, which are not mentioned above, may be understood from the following descriptions and more clearly understood from the embodiment of the present disclosure. In addition, it can be easily understood that the objects and advantages of the present disclosure may be realized by means described in the specification and a combination thereof.

### [Technical Solution]

According to a first aspect of the present disclosure, provided is a silicon negative electrode active material comprising silicon particles and a carbon material on the silicon particles, wherein a ratio of carbon content (C₀) of the silicon negative electrode active material satisfies Equation 1 below.$20 wt % \leq {C}_{0} = \left\{B/\left(A+B\right)\right\} x 100 \leq 60 wt %$

In Equation 1 above, A is a silicon content of the silicon negative electrode active material, and B is a carbon content of the silicon negative electrode active material.

According to a second aspect of the present disclosure, in the first aspect, the ratio of carbon content of the silicon negative electrode active material may be 30 wt% or more and 45 wt% or less.

According to a third aspect of the present disclosure, in the first or second aspect, the ratio of carbon content of the silicon negative electrode active material may be 35 wt% or more and 45 wt% or less.

According to a fourth aspect of the present disclosure, in any one of the first to third aspects, a pore having a long side of a size of 300 nm or more may not exist in a cross-section where the silicon negative electrode active material is cut.

According to a fifth aspect of the present disclosure, in any one of the first to fourth aspects, the silicon negative electrode active material comprises, based on a midpoint on a major axis of a cross-section where the silicon negative electrode active material is cut, a first region having a radius of 0 or more and 1/3 or less, a second region having a radius of more than 1/3 and 2/3 or less, and a third region having a radius of more than 2/3 and 3/3 or less, and ratios of carbon content of each of the first to third regions may be identical to or different from each other. Here, the radius being 0 may mean the midpoint on the major axis of the cross-section where the silicon negative electrode active material is cut. Alternatively, the first region may be a region having a radius of more than 0 and 1/3 or less.

According to a sixth aspect of the present disclosure, in any one of the first to fifth aspects, provided may be the silicon negative electrode active material, wherein the silicon negative electrode active material comprises, based on a midpoint on a major axis of a cross-section where the silicon negative electrode active material is cut, a first region having a radius of 0 or more and 1/3 or less, a second region having a radius of more than 1/3 and 2/3 or less, and a third region having a radius of more than 2/3 and 3/3 or less, and in each of the regions, a difference between each carbon content of arbitrary two points included in a unit area of 100 nm² is an absolute value of 10% or less (unit: wt%). Specifically, in each of the regions, the difference between each carbon content of arbitrary two points included in a unit area of 100 nm² may be, based on an absolute value, 9% or less, 8% or less, 7% or less, 6% or less, 5% or less, 4% or less, 3% or less, 2% or less, 1% or less, or 0.1% or less, and more specifically, in each of the regions, the difference between each carbon content of arbitrary two points included in a unit area of 100 nm² may be 0%. That is, in each of the regions, each carbon content of arbitrary two points included in a unit area of 100 nm² may be identical to each other.

According to a seventh aspect of the present disclosure, in the fifth or sixth aspect, the ratios of carbon content of each of the first to third regions may be different from each other.

According to an eighth aspect of the present disclosure, in any one of the fifth to seventh aspects, the ratio of carbon content of the first region may be lower than the ratio of carbon content of the second region.

According to a ninth aspect of the present disclosure, in any one of the fifth to eighth aspects, the ratio of carbon content of the first region may be lower than the ratio of carbon content of the third region.

According to a tenth aspect of the present disclosure, in any one of the fifth to ninth aspects, the ratio of carbon content of the second region may be lower than the ratio of carbon content of the third region.

According to an eleventh aspect of the present disclosure, in any one of the first to tenth aspects, the ratio of carbon content may become lower with increasing depth in a direction from a surface toward a center of the silicon negative electrode active material.

According to a twelfth aspect of the present disclosure, in any one of the first to eleventh aspects, the silicon negative electrode active material having a BET specific surface area of 10 m²/g or less may be provided.

According to a thirteenth aspect of the present disclosure, provided is a negative electrode comprising the silicon negative electrode active material according to any one of the first to twelfth aspects.

According to a fourteenth aspect of the present disclosure, provided is a secondary battery comprising: the negative electrode according to the thirteenth aspect; a positive electrode; a separator interposed between the negative electrode and the positive electrode; and an electrolyte solution.

According to a fifteenth aspect of the present disclosure, in any one of the first to fourteenth aspects, the carbon content of the first region R1 may be 6 to 47 wt%, 6 to 44 wt%, 7 to 40 wt%, 8 to 36 wt%, 9 to 35 wt%, 10 to 30 wt%, 11 to 29 wt%, 12 to 28 wt%, 13 to 27 wt%, 14 to 26 wt%, 15 to 25 wt%, 16 to 24 wt%, 17 to 23 wt%, 18 to 22 wt%, 19 to 21 wt%, or 20 to 21 wt%, and specifically may be 20.06 to 21 wt%.

According to a sixteenth aspect of the present disclosure, in any one of the first to fifteenth aspects, the carbon content of the second region R2 may be 9 to 50 wt%, 10 to 49 wt%, 11 to 48 wt%, 15 to 44 wt%, 17 to 40 wt%, 20 to 38 wt%, 21 to 36 wt%, 25 to 33 wt%, 26 to 32 wt%, 27 to 32 wt%, 28 to 32 wt%, 29 to 32 wt%, or 30 to 31.65 wt%.

According to a seventeenth aspect of the present disclosure, in any one of the first to sixteenth aspects, the carbon content of the third region R3 may be 20 to 65 wt%, 22 to 65 wt%, 25 to 60 wt%, 30 to 59 wt%, 35 to 55 wt%, 40 to 54 wt%, 45 to 53 wt%, 46 to 52 wt%, 47 to 51 wt%, 49 to 51 wt%, or 50 to 50.03 wt%.

The technical solutions for solving the problems do not list all of the features of the present disclosure. Various features of the present disclosure and advantages and effects according thereto may be understood in more detail with reference to the specific description below.

### [Advantageous Effects]

According to one aspect of the present disclosure, volume expansion of a silicon negative electrode active material due to insertion/extraction of lithium ions during a charging/discharging process of a secondary battery may be effectively suppressed. Accordingly, one aspect of the present disclosure may implement an effect of simultaneously improving initial coulombic efficiency, specific capacity, and capacity retention of a secondary battery by improving mechanical durability of a silicon negative electrode active material.

In addition to the above-described effects, specific effects of the present disclosure will be described together while describing specific details for carrying out the invention below. Also, the effects of the present disclosure are not limited to the effects mentioned above, and can be easily implemented by the means described in the specification and a combination thereof.

### [Description of Drawings]

FIG. 1 is a cross-sectional view of a silicon negative electrode active material according to one embodiment of the present disclosure.
FIG. 2A is a focused ion beam (FIB)-scanning electron microscope (SEM) photograph of a silicon negative electrode active material before heat treatment in a method according to Comparative Example 2.
FIG. 2B is an FIB-SEM photograph of a silicon negative electrode active material after heat treatment in a method according to Comparative Example 2.
FIG. 3A is an FIB-SEM photograph of a silicon negative electrode active material before heat treatment in a method according to Example 8.
FIG. 3B is an FIB-SEM photograph of a silicon negative electrode active material after heat treatment in a method according to Example 8.
FIG. 4A is an SEM photograph of a surface of a silicon negative electrode active material before 100 cycles in a method according to Comparative Example 2.
FIG. 4B is an SEM photograph of a surface of a silicon negative electrode active material after 100 cycles in a method according to Comparative Example 2.
FIG. 5A is an SEM photograph of a surface of a silicon negative electrode active material before 100 cycles in a method according to Example 8.
FIG. 5B is an SEM photograph of a surface of a silicon negative electrode active material after 100 cycles in a method according to Example 8.

### [Mode for Disclosure]

In this specification, expressions in the singular include expressions in the plural unless the context clearly dictates otherwise.

In this specification, when a term expressed as a component includes a functional expression, it may be defined as encompassing other functions that can be obviously understood by those skilled in the art in addition to the corresponding function.

In a case where several embodiments are described in this specification, effects of the present disclosure may be defined as including not only operation effects derived from each embodiment itself but also effects occurring as each embodiment is organically combined. For example, even if Embodiment 1 and 2 are described independently in this specification, unless clearly meant otherwise in context, effects occurring by organically combining Embodiment 1 and 2 may also be included in the effects of the present disclosure.

In this specification, a range of numerical values indicated using the term 'to' indicates a range of numerical values including values described before and after the term as a lower limit value and an upper limit value, respectively. When numerical values as the upper limit and the lower limit of an arbitrary numerical range are each disclosed as a plurality, the range of numerical values disclosed in this specification may be understood as an arbitrary numerical range having an arbitrary one value among the plurality of lower limit values and an arbitrary one value among the plurality of upper limit values as the lower limit value and the upper limit value, respectively. For example, when described in the specification as a to b, or c to d, it may be understood that a or more and b or less (a to b), a or more and d or less (a to d), c or more and d or less (c to d), or c or more and b or less (c to b) are described.

In this specification, terms such as "about" or "substantially" mean a reasonable amount of deviation of a modified term such that a final result does not significantly change. Such terms may be interpreted as including a deviation of at least ±5% or at least ±10% within a limit where the deviation does not invalidate the meaning of the word by modifying the same.

In this specification, a "layer" or film may include, when a region where a corresponding layer or film exists is observed, a case where it is formed only in a part of the corresponding region in addition to a case where it is formed in an entirety of the corresponding region. For example, such may be defined as including a flat form, a non-flat form, and a combination thereof for a surface of a layer or film; or a continuous form, a non-continuous form, and a combination thereof. For example, when another member is composed of a layer or film directly on one member, a coverage of the other member with respect to a surface of the one member may be defined as 1% or more, 5% or more, 10% or more, 20% or more, 30% or more, 40% or more, 50% or more, 60% or more, 70% or more, 80% or more, 85% or more, 90% or more, 95% or more, or 99% or more.

In this specification, an average particle diameter of particles may be defined as a particle diameter (D₅₀) when a cumulative percentage becomes 50% in a volume-based particle size distribution curve when measured by a laser diffraction particle size distribution measuring device.

In this specification, "weight average molecular weight" or "number average molecular weight" is a standard polystyrene-equivalent molecular weight and may be analyzed through a gel permeation chromatography (GPC) device. Here, the GPC analysis method may use tetrahydrofuran as a developing solvent, and may be performed under analysis conditions of a sample concentration of 5 mg/mL, a sample introduction amount of 100 µl, a temperature of 40°C, and a flow rate of 1 mL/min.

According to one aspect of the present disclosure, provided is a silicon negative electrode active material including silicon particles and a carbon material on the silicon particles, wherein a ratio of carbon content (C₀) of the silicon negative electrode active material satisfies Equation 1 below.$20 wt % \leq {C}_{0} = \left\{B/\left(A+B\right)\right\} x 100 \leq 60 wt %$

In Equation 1 above, A is a silicon content (wt%) of the silicon negative electrode active material, and B is a carbon content (wt%) of the silicon negative electrode active material.

In a case of a conventional silicon negative electrode active material, there was a problem that cracks occur on a surface due to volume expansion of the silicon negative electrode active material due to insertion/extraction of lithium ions during a charging/discharging process of a secondary battery. In order to further improve mechanical durability, a process of coating a carbon material on a silicon negative electrode active material was introduced, but there was a problem that it is difficult to simultaneously improve initial coulombic efficiency, specific capacity, and capacity retention of a secondary battery by simply introducing a carbon material. In another aspect, when silicon particles are simply pulverized and used, a problem occurred in which initial efficiency drops and capacity also decreases while adhesiveness becomes low as a specific surface area becomes too high. To solve this, a process of aggregating primary particles using a spray dryer to form secondary particles was attempted, but a problem in which initial efficiency and capacity loss occur as the specific surface area is still high was accompanied. According to one aspect of the present disclosure, by adjusting a carbon content of the silicon negative electrode active material within a numerical range described in Equation 1 above based on a total weight of the silicon negative electrode active material, volume expansion of the silicon negative electrode active material due to insertion/extraction of lithium ions during a charging/discharging process of a secondary battery may be effectively suppressed. Accordingly, the present disclosure may implement an effect of simultaneously improving initial coulombic efficiency, specific capacity, and capacity retention of a secondary battery by improving mechanical durability of a silicon negative electrode active material. According to another aspect of the present disclosure, the problem in which initial efficiency and capacity loss occur due to a high specific surface area of the above-described secondary battery may be solved.

Hereinafter, a configuration of the present disclosure will be described in more detail.

### 1. Silicon negative electrode active material

### Silicon particles

The silicon particles according to the present disclosure may be ones that improve capacity performance of a secondary battery and at the same time, even if a volume of the particles expands as lithium ions are inserted, destruction of the particles does not occur.

The silicon particles according to the present disclosure are silicon pulverized into nanoscale, and may include one or more selected from the group consisting of Si, SiOx (0<x≤2), a Si-C composite, and a Si-Y alloy (Y is any one element selected from the group consisting of an alkali metal, an alkaline earth metal, a transition metal, a Group 13 element, a Group 14 element, and a rare earth element), and specifically may include silicon (Si). According to one embodiment of the present disclosure, in a case where the silicon particles are pulverized silicon, capacity characteristics of a secondary battery may be further improved.

In several embodiments of the present disclosure, an average particle diameter of the silicon particles may be 800 nm or less, 700 nm or less, 600 nm or less, or 500 nm or less, and specifically 50 nm or more, 60 nm or more, 70 nm or more, 80 nm or more, 90 nm or more, or 100 nm or more; and 120 nm or less, 150 nm or less, 200 nm or less, 300 nm or less, 400 nm or less, or 500 nm or less, and more specifically may be 50 to 500 nm, 60 to 400 nm, 70 to 300 nm, 80 to 300 nm, 80 to 200 nm, 90 to 150 nm, or 100 to 120 nm. According to several embodiments of the present disclosure, as the average particle diameter of the silicon particles satisfies the numerical range, a lifespan of a secondary battery may be further improved.

In several embodiments of the present disclosure, the silicon particles may be ones in which a silicon raw material powder is pulverized. Specifically, an average particle diameter of the silicon raw material powder may be 10 to 100 µm, more specifically 30 to 50 µm. According to several embodiments of the present disclosure, as the average particle diameter of the silicon raw material powder satisfies the numerical range, the particle diameter of the silicon particles is controlled, so that a lifespan of a secondary battery may be further improved.

In several examples, the silicon particles may be ones in which metallurgical grade silicon (MG-Si) is pulverized. Specifically, a purity of the metallurgical grade silicon may be 97 wt% or more.

### Carbon material

The silicon negative electrode active material according to the present disclosure includes a carbon material on the silicon particles. Specifically, the carbon material is one in which a carbon source is converted through heat treatment and chemical vapor deposition methods, and may effectively prevent volume expansion of silicon particles while simultaneously suppressing a side reaction between the silicon particles and an electrolyte solution.

In several embodiments of the present disclosure, the carbon material may be one in which a surface of the silicon particles is partially or entirely coated. Specifically, a shape of the carbon material may not be particularly limited, and for example, the carbon material may be in a form of a layer partially or entirely coated on the surface of the silicon particles. According to several embodiments of the present disclosure, as the carbon material is partially or entirely coated on the surface of the silicon particles, volume expansion of the silicon particles may be more effectively suppressed.

In several embodiments of the present disclosure, when the carbon material is configured in a form of a carbon layer, a thickness of the carbon layer may be 1 nm or more, 10 nm or more, 20 nm or more, 30 nm or more, or 40 nm or more; and 110 nm or less, 100 nm or less, 90 nm or less, or 80 nm or less, and specifically may be 1 to 110 nm, 20 to 80 nm, or 40 to 80 nm. Specifically, when the thickness of the carbon layer satisfies the numerical range, volume expansion of silicon particles during a charging/discharging process may be effectively prevented.

In several embodiments of the present disclosure, the carbon material may include a crystalline region and an amorphous region. Here, a criterion for distinguishing the crystalline region and the amorphous region may be a crystallite size (L_{c}) of a thickness of a crystal constituting the carbon material in a c-axis direction (height direction). In several examples, a crystallite size of the crystalline region may be 100 nm or more, 200 nm or more, 500 nm or more, or 1,000 nm or more, and a crystallite size of the amorphous region may be less than 100 nm, less than 200 nm, less than 500 nm, or less than 1,000 nm. In several examples, the crystalline region may be derived from one manufactured by heat-treating pitch or the like, and the amorphous region may be derived from acetylene gas or the like of a chemical vapor deposition process. For example, a transmission electron microscope (TEM) analysis equipment may be used as an analysis method for the crystallite size.

In several embodiments of the present disclosure, based on an entire region of the carbon material, the crystalline region may be 1% or more, 5% or more, or 10% or more; and 30% or less, 40% or less, or 50% or less, and specifically may be 1 to 50%, 5 to 40%, or 10 to 30%.

In several embodiments of the present disclosure, based on an entire region of the carbon material, the amorphous region may be 50% or more, 60% or more, or 70% or more; and 90% or less, 95% or less, or 99% or less, and specifically may be 50 to 99%, 60 to 95%, or 70 to 90%.

Here, the crystalline region and the amorphous region may be randomly distributed within the silicon negative electrode active material. Specifically, when contents of the crystalline region and the amorphous region satisfy the numerical ranges, volume expansion of silicon particles during a charging/discharging process may be effectively prevented.

### Parameter

A ratio of carbon content (C₀) of the silicon negative electrode active material according to the present disclosure satisfies Equation 1 below.$20 wt % \leq {C}_{0} = \left\{B/\left(A+B\right)\right\} x 100 \leq 60 wt %$

In Equation 1 above, A is a silicon content of the silicon negative electrode active material, and B is a carbon content of the silicon negative electrode active material. Specifically, by adjusting the ratio of carbon content of the silicon negative electrode active material to 20 to 60 wt%, initial coulombic efficiency and capacity retention of a secondary battery may be significantly improved. If the ratio of carbon content of the silicon negative electrode active material is less than the numerical range, a specific capacity of a secondary battery may become high, but a problem in which initial coulombic efficiency and capacity retention are significantly low may occur. If the ratio of carbon content of the silicon negative electrode active material exceeds the numerical range, a problem in which initial coulombic efficiency and specific capacity of a secondary battery significantly decrease may occur.

In several examples, the silicon content and the carbon content of the silicon negative electrode active material may be analyzed using an energy-dispersive X-ray spectroscopy (EDS) analysis equipment.

In several embodiments of the present disclosure, the ratio of carbon content of the silicon negative electrode active material may be 20 wt% or more, 20.62 wt% or more, 25 wt% or more, 29.16 wt% or more, 30 wt% or more, 31.33 wt% or more, 34.89 wt% or more, 35 wt% or more, 35.27 wt% or more, 38 wt% or more, 39 wt% or more, 40 wt% or more, 41 wt% or more, 42 wt% or more, 43 wt% or more, or 44 wt% or more; and 44.47 wt% or less, 44.51 wt% or less, 44.75 wt% or less, 44.94 wt% or less, 45 wt% or less, 47.54 wt% or less, 48 wt% or less, 48.16 wt% or less, 50 wt% or less, 53 wt% or less, 55 wt% or less, 59.20 wt% or less, or 60 wt% or less, and specifically may be 30 to 45 wt%, 35 to 45 wt%, 38 to 45 wt%, 39 to 45 wt%, 40 to 45 wt%, 41 to 45 wt%, 42 to 45 wt%, 43 to 45 wt%, or 44 to 45 wt%. According to several embodiments of the present disclosure, when the ratio of carbon content of the silicon negative electrode active material satisfies the numerical range, mechanical durability of the silicon negative electrode active material is further improved, so that volume expansion of the silicon negative electrode active material due to insertion/extraction of lithium ions during a charging/discharging process of a secondary battery may be effectively suppressed. Accordingly, an effect of simultaneously improving initial coulombic efficiency, specific capacity, and capacity retention of a secondary battery may be implemented.

In several embodiments of the present disclosure, the ratio of carbon content (C₀) in a cross-section where the silicon negative electrode active material is cut may have continuity. Here, the ratio of carbon content having continuity may mean a case in which a pore having a long side of a size of 300 nm or more does not exist in the cross-section where the silicon negative electrode active material is cut. On the other hand, the ratio of carbon content having discontinuity may mean that one or more pores having a long side of a size of 300 nm or more exist in the cross-section where the silicon negative electrode active material is cut. For example, as a method for measuring continuity for the ratio of carbon content, a method of cutting a negative electrode active material having an average particle diameter of 15 µm using a focused ion beam (FIB) and then measuring with an SEM may be used. According to several embodiments of the present disclosure, as the ratio of carbon content has continuity, an effect of simultaneously improving initial coulombic efficiency, specific capacity, and capacity retention of a secondary battery may be implemented.

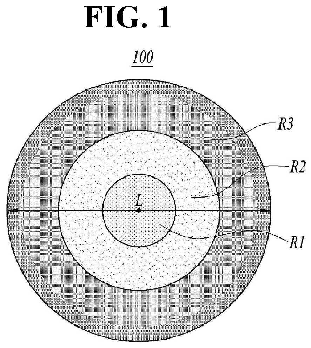

FIG. 1 is a cross-sectional view of a silicon negative electrode active material according to one embodiment of the present disclosure.

With reference to FIG. 1, based on a midpoint on a major axis of a cross-section where a silicon negative electrode active material 100 is cut, the silicon negative electrode active material 100 according to the present disclosure may include a first region R1 having a radius of 0 or more and 1/3 or less, a second region R2 having a radius of more than 1/3 and 2/3 or less, and a third region R3 having a radius of more than 2/3 and 3/3 or less. Here, ratios of carbon content of each of the first to third regions R1 to R3 may be identical to or different from each other, and specifically may be different. According to several embodiments of the present disclosure, as Equation 1 above is satisfied and at the same time, carbon contents of each of the first to third regions are adjusted to be different from each other, volume expansion of a silicon negative electrode active material due to insertion/extraction of lithium ions during a charging/discharging process of a secondary battery may be more effectively suppressed. Accordingly, cycle stability of a secondary battery may be further improved.

In several embodiments of the present disclosure, the silicon negative electrode active material includes, based on a midpoint on a major axis of a cross-section where the silicon negative electrode active material is cut, a first region R1 having a radius of 0 or more and 1/3 or less, a second region R2 having a radius of more than 1/3 and 2/3 or less, and a third region R3 having a radius of more than 2/3 and 3/3 or less, and in each of the regions, a difference between each carbon content of arbitrary two points included in a unit area of 100 nm² may be an absolute value of 10% or less. Specifically, in each of the regions, the difference between each carbon content of arbitrary two points included in a unit area of 100 nm² may be, based on an absolute value, 9% or less, 8% or less, 7% or less, 6% or less, 5% or less, 4% or less, 3% or less, 2% or less, 1% or less, or 0.1% or less, and more specifically, in each of the regions, the difference between each carbon content of arbitrary two points included in a unit area of 100 nm² may be 0%. That is, in each of the regions, each carbon content of arbitrary two points included in a unit area of 100 nm² may be identical to each other. According to several embodiments of the present disclosure, as the difference between each carbon content of arbitrary two points included in a unit area of 100 nm² satisfies the numerical range, volume expansion of a silicon negative electrode active material due to insertion/extraction of lithium ions during a charging/discharging process of a secondary battery may be more effectively suppressed. Accordingly, cycle stability of a secondary battery may be further improved.

In several embodiments of the present disclosure, a ratio of carbon content of the first region R1 may be lower than a carbon content of the second region R2. According to several embodiments of the present disclosure, as the ratio of carbon content of the first region R1 is adjusted to be lower than the ratio of carbon content of the second region R2, volume expansion of a silicon negative electrode active material due to insertion/extraction of lithium ions during a charging/discharging process of a secondary battery may be more effectively suppressed, and accordingly, initial coulombic efficiency, specific capacity, and capacity retention of a secondary battery may be further improved.

In several examples, a difference (R2-R1) between the ratio of carbon content of the second region R2 and the ratio of carbon content of the first region R1 may be 0.1 wt% or more, 5 wt% or more, 10 wt% or more, or 11 wt% or more; and 12 wt% or less, 13 wt% or less, 15 wt% or less, 17 wt% or less, 20 wt% or less, or 21 wt% or less, and specifically may be 0.1 to 21 wt%, 5 to 15 wt%, or 10 to 13 wt%, specifically 10 to 12 wt%, and more specifically 11 to 12 wt%. Specifically, when the difference (R2-R1) between the ratio of carbon content of the second region R2 and the ratio of carbon content of the first region R1 satisfies the numerical range, electrochemical performance of a secondary battery may be further improved.

In several embodiments of the present disclosure, the ratio of carbon content of the first region R1 may be lower than a ratio of carbon content of the third region R3. According to several embodiments of the present disclosure, as the ratio of carbon content of the first region R1 is adjusted to be lower than the ratio of carbon content of the third region R3, volume expansion of a silicon negative electrode active material due to insertion/extraction of lithium ions during a charging/discharging process of a secondary battery may be more effectively suppressed, and accordingly, initial coulombic efficiency, specific capacity, and capacity retention of a secondary battery may be further improved.

In several examples, a difference (R3-R1) between the ratio of carbon content of the third region R3 and the ratio of carbon content of the first region R1 may be 0.1 wt% or more, 5 wt% or more, 10 wt% or more, 15 wt% or more, 20 wt% or more, 25 wt% or more, or 28 wt% or more; and 31 wt% or less, 32 wt% or less, 33 wt% or less, 35 wt% or less, or 40 wt% or less, and specifically may be 0.1 to 40 wt%, 10 to 35 wt%, 15 to 33 wt%, 25 to 32 wt%, or 28 to 31 wt%. Specifically, when the difference (R3-R1) between the ratio of carbon content of the third region R3 and the ratio of carbon content of the first region R1 satisfies the numerical range, electrochemical performance of a secondary battery may be further improved.

In several embodiments of the present disclosure, the ratio of carbon content of the second region R2 may be lower than a ratio of carbon content of the third region R3. According to several embodiments of the present disclosure, as the ratio of carbon content of the second region R2 is adjusted to be lower than the ratio of carbon content of the third region R3, volume expansion of a silicon negative electrode active material due to insertion/extraction of lithium ions during a charging/discharging process of a secondary battery may be more effectively suppressed, and accordingly, initial coulombic efficiency, specific capacity, and capacity retention of a secondary battery may be further improved.

In several examples, a difference (R3-R2) between a ratio of a carbon content of the third region R3 and a carbon content of the second region R2 may be 0.1 wt% or more, 5 wt% or more, 10 wt% or more, 16 wt% or more, 17 wt% or more, or 18 wt% or more; and 19 wt% or less, 20 wt% or less, 25 wt% or less, 30 wt% or less, 33 wt% or less, or 34 wt% or less, and specifically may be 0.1 to 34 wt%, 5 to 20 wt%, 16 to 20 wt%, 17 to 20 wt%, 18 to 20 wt%, or 18 to 19 wt%. Specifically, when the difference (R3-R2) between the ratio of carbon content of the third region R3 and the ratio of carbon content of the second region R2 satisfies the numerical range, electrochemical performance of a secondary battery may be further improved.

In several embodiments of the present disclosure, a carbon content may become lower with increasing depth in a direction from a surface toward a center of the silicon negative electrode active material. According to several embodiments of the present disclosure, as the carbon content becomes lower with increasing depth in a direction from a surface toward a center of the silicon negative electrode active material, volume expansion of the silicon negative electrode active material due to insertion/extraction of lithium ions during a charging/discharging process of a secondary battery may be more effectively suppressed, and accordingly, initial coulombic efficiency, specific capacity, and capacity retention of a secondary battery may be further improved.

In several embodiments of the present disclosure, the carbon content of the first region R1 may be 6 wt% or more, 7 wt% or more, 8 wt% or more, 9 wt% or more, 10 wt% or more, 10.61 wt% or more, 11 wt% or more, 12 wt% or more, 13 wt% or more, 15 wt% or more, 15.03 wt% or more, 15.21 wt% or more, 16 wt% or more, 16.55 wt% or more, 17 wt% or more, 17.81 wt% or more, 18.97 wt% or more, or 20.06 wt% or more; and 21 wt% or less, 22 wt% or less, 23 wt% or less, 24 wt% or less, 25 wt% or less, 25.38 wt% or less, 26 wt% or less, 27 wt% or less, 28 wt% or less, 29 wt% or less, 30 wt% or less, 31.86 wt% or less, 33 wt% or less, 34.33 wt% or less, 35 wt% or less, 35.22 wt% or less, 36 wt% or less, 38 wt% or less, 40 wt% or less, 41 wt% or less, 42 wt% or less, 43.64 wt% or less, 44 wt% or less, 45 wt% or less, 46 wt% or less, 46.34 wt% or less, or 47 wt% or less, and specifically may be 6 to 44 wt%, 7 to 40 wt%, 8 to 36 wt%, 9 to 35 wt%, 10 to 30 wt%, 11 to 29 wt%, 12 to 28 wt%, 13 to 27 wt%, 14 to 26 wt%, 15 to 25 wt%, 16 to 24 wt%, 17 to 23 wt%, 18 to 22 wt%, 19 to 21 wt%, or 20 to 21 wt%, and specifically may be 20.06 to 21 wt%. According to several embodiments of the present disclosure, as the carbon content of the first region R1 is adjusted within the numerical range, volume expansion of a silicon negative electrode active material due to insertion/extraction of lithium ions during a charging/discharging process of a secondary battery may be more effectively suppressed, and accordingly, initial coulombic efficiency, specific capacity, and capacity retention of a secondary battery may be further improved.

In several embodiments of the present disclosure, the carbon content of the second region R2 may be 9 wt% or more, 10 wt% or more, 11 wt% or more, 13 wt% or more, 14 wt% or more, 15.96 wt% or more, 17 wt% or more, 19 wt% or more, 20 wt% or more, 21 wt% or more, 23 wt% or more, 25 wt% or more, 26 wt% or more, 27 wt% or more, 28 wt% or more, 29 wt% or more, or 30 wt% or more; and 31.65 wt% or less, 32 wt% or less, 33 wt% or less, 34.54 wt% or less, 35 wt% or less, 35.58 wt% or less, 36 wt% or less, 37 wt% or less, 38 wt% or less, 39.91 wt% or less, 40 wt% or less, 43.75 wt% or less, 44 wt% or less, 46.55 wt% or less, 48 wt% or less, 49 wt% or less, 49.02 wt% or less, or 50 wt% or less, and specifically may be 9 to 50 wt%, 10 to 49 wt%, 11 to 48 wt%, 15 to 44 wt%, 17 to 40 wt%, 20 to 38 wt%, 21 to 36 wt%, 25 to 33 wt%, 26 to 32 wt%, 27 to 32 wt%, 28 to 32 wt%, 29 to 32 wt%, or 30 to 31.65 wt%. According to several embodiments of the present disclosure, as the carbon content of the second region R2 is adjusted within the numerical range, volume expansion of a silicon negative electrode active material due to insertion/extraction of lithium ions during a charging/discharging process of a secondary battery may be more effectively suppressed, and accordingly, initial coulombic efficiency, specific capacity, and capacity retention of a secondary battery may be further improved.

In several embodiments of the present disclosure, the carbon content of the third region R3 may be 20 wt% or more, 22 wt% or more, 22.37 wt% or more, 25 wt% or more, 30 wt% or more, 31.92 wt% or more, 34.05 wt% or more, 34.84 wt% or more, 35 wt% or more, 39.02 wt% or more, 40 wt% or more, 43.94 wt% or more, 46 wt% or more, 46.70 wt% or more, 47 wt% or more, 47.81 wt% or more, 49 wt% or more, or 50 wt% or more; and 50.03 wt% or less, 50.46 wt% or less, 51 wt% or less, 52 wt% or less, 53 wt% or less, 54 wt% or less, 55 wt% or less, 56 wt% or less, 56.08 wt% or less, 59 wt% or less, 60 wt% or less, 64.86 wt% or less, or 65 wt% or less, and specifically may be 20 to 65 wt%, 22 to 65 wt%, 25 to 60 wt%, 30 to 59 wt%, 35 to 55 wt%, 40 to 54 wt%, 45 to 53 wt%, 46 to 52 wt%, 47 to 51 wt%, 49 to 51 wt%, or 50 to 50.03 wt%. According to several embodiments of the present disclosure, as the carbon content of the third region R3 is adjusted within the numerical range, volume expansion of a silicon negative electrode active material due to insertion/extraction of lithium ions during a charging/discharging process of a secondary battery may be more effectively suppressed, and accordingly, initial coulombic efficiency, specific capacity, and capacity retention of a secondary battery may be further improved.

### Physical properties

In several embodiments of the present disclosure, a BET specific surface area of the silicon negative electrode active material may be 10.0 m²/g or less, 6.0 m²/g or less, 4.0 m²/g or less, or 2.0 m²/g or less, specifically 1.0 m²/g or less, 0.9 m²/g or less, 0.8 m²/g or less, 0.79 m²/g or less, 0.69 m²/g or less, 0.60 m²/g or less, or 0.58 m²/g or less, and more specifically may be 0.01 m²/g or more and any one of the plurality of numerical values or less. According to several embodiments of the present disclosure, as the BET specific surface area of the silicon negative electrode active material satisfies the numerical range, a side reaction between an electrolyte solution and a negative electrode may be effectively suppressed.

### Manufacturing method

A manufacturing method of a silicon negative electrode active material according to the present disclosure may include steps of: (S1) preparing a mixture including a silicon nanoparticle dispersion and a carbon precursor solution; (S2) manufacturing a preliminary silicon negative electrode active material by spray-drying the mixture; and (S3) manufacturing a silicon negative electrode active material from the preliminary silicon negative electrode active material by a heat treatment method and a chemical vapor deposition method.

In several examples, the silicon nanoparticle dispersion may be a dispersion in which silicon nanoparticles are dispersed in a dispersion medium. Specifically, an average particle diameter of the silicon nanoparticles may be 150 nm or less. In addition, the dispersion medium is not particularly limited, and a compound capable of dispersing silicon nanoparticles may be selected, and for example, may be ethanol.

In several examples, the carbon precursor solution is not particularly limited and may be a solution in which various carbon sources are dissolved in a solvent. Specifically, the carbon source may be pitch such as petroleum-based pitch and coal tar pitch, aromatic carbon materials such as sugars, lignin, and cellulose, polyacrylonitrile, or the like.

In several examples, as a method for mixing the silicon nanoparticle dispersion and the carbon precursor solution, various stirrers commonly used in the corresponding technical field may be used. For example, the mixture may be stirred at 1,000 to 3,000 rpm for 60 to 120 minutes.

The preliminary silicon negative electrode active material according to the present disclosure may be a composite in which silicon and carbon sources are granulated. Specifically, the above-described dispersion medium and solvent may be removed through the spray-drying method, and accordingly, silicon and carbon may be granulated in a composite form.

In several examples, the spray-drying method is not particularly limited and may be a method performed with hot air of 50 to 150°C.

In several examples, the heat treatment method is not particularly limited and may be a method of heat-treating the preliminary silicon negative electrode active material at 600 to 1,200°C for 1 to 10 hours. Through the heat treatment method, empty regions randomly distributed inside the preliminary silicon negative electrode active material may be formed.

In several examples, the chemical vapor deposition method is not particularly limited and may be a step of inputting carbon gas by 500 to 3,000 sccm for 1 to 10 hours. Through the chemical vapor deposition method, carbon derived from carbon gas may fill the empty regions. Specifically, the carbon gas is not particularly limited and may include acetylene gas, ethylene, toluene, methane, and the like.

In several examples, the heat treatment method and the chemical vapor deposition method may be performed simultaneously without being distinguished in time.

### 2. Negative electrode

According to another aspect of the present disclosure, provided is a negative electrode including the silicon negative electrode active material.

A manufacturing method of a negative electrode according to the present disclosure may include steps of: preparing a negative electrode slurry including a silicon negative electrode active material, a conductive material for an electrode, and a negative electrode binder according to several embodiments; forming a negative electrode active material layer by coating and drying the negative electrode slurry on at least one surface of a negative electrode current collector; and rolling the current collector on which the negative electrode active material layer is formed.

In several examples, the negative electrode current collector may perform a role of a passage for delivering electrons from an outside so that an electrochemical reaction occurs in a negative electrode active material or receiving electrons from a negative electrode active material and sending the same to an outside. For example, as the negative electrode current collector, copper, stainless steel, nickel, titanium, sintered carbon, one in which a surface of stainless steel is surface-treated with carbon, nickel, titanium, silver, etc., or the like may be used, and specifically, a transition metal that adsorbs carbon well, such as copper or nickel, may also be used as a current collector. For example, a thickness of the negative electrode current collector may be 6 µm to 55 µm, but the thickness of the negative electrode current collector is not limited thereto.

In several examples, the step of rolling the current collector on which the negative electrode active material layer is formed may be performed under a condition of a mixture density of 1.0 g/cc or more. In a case where a silicon negative electrode active material according to several embodiments of the present disclosure is used, even if a rolling process is performed under the condition, particles are not destroyed, so that compression resistance may be further improved. Here, the mixture density means a degree to which a mixture material is well pressed, and may vary depending on pressure and thickness of a roll press.

In several embodiments of the present disclosure, the negative electrode slurry may further include a graphite-based active material in addition to a silicon negative electrode active material. For example, the graphite-based active material may include one or more selected from the group consisting of artificial graphite, natural graphite, graphitized carbon fiber, and graphitized mesocarbon microbeads.

The negative electrode binder may suppress separation between negative electrode active material (silicon negative electrode active material) particles, or between a negative electrode active material layer and a current collector. As the negative electrode binder, a polymer commonly used for an electrode in the corresponding technical field may be used. Such a negative electrode binder may be, but is not limited to, poly(vinylidene fluoride-co-hexafluoropropylene), poly(vinylidene fluoride-co-trichloroethylene), poly(methylmethacrylate), poly(ethylhexylacrylate), poly(butylacrylate), poly(acrylonitrile), poly(vinylpyrrolidone), poly(vinyl acetate), poly(ethylene-co-vinyl acetate), poly(ethylene oxide), polyacrylate, cellulose acetate, cellulose acetate butyrate, cellulose acetate propionate, cyanoethyl pullulan, cyanoethyl poly(vinyl alcohol), cyanoethylcellulose, cyanoethylsucrose, pullulan, carboxymethyl cellulose, and the like.

The conductive material for an electrode according to the present disclosure is not particularly limited and may be any one selected from the group consisting of graphite, carbon black, carbon fiber or metal fiber, metal powder, conductive whisker, conductive metal oxide, activated carbon, and polyphenylene derivatives, or a mixture of two or more types of conductive materials among these, and more specifically, may be one type selected from the group consisting of natural graphite, artificial graphite, super-p, acetylene black, ketjen black, channel black, furnace black, lamp black, thermal black, denka black, aluminum powder, nickel powder, zinc oxide, potassium titanate, and titanium dioxide, or a mixture of two or more types of the conductive materials.

### 3. Secondary battery

According to another aspect of the present disclosure, provided is a secondary battery including: a negative electrode according to several embodiments; a positive electrode; a separator interposed between the negative electrode and the positive electrode; and an electrolyte solution. The descriptions repeated with the above-described part will be briefly described or omitted.

### Positive electrode

The positive electrode according to the present disclosure may include a positive electrode current collector and a positive electrode active material layer disposed on at least one surface of the positive electrode current collector. The positive electrode active material layer may include a positive electrode active material, a conductive material, and a positive electrode binder.

In several examples, the positive electrode current collector is not particularly limited as long as it has high conductivity without causing a chemical change in a battery. Specifically, as the positive electrode current collector, copper, stainless steel, aluminum, titanium, sintered carbon, one in which a surface of stainless steel is surface-treated with carbon, nickel, titanium, silver, or the like, an aluminum-cadmium alloy, or the like may be used. The positive electrode current collector may normally have a thickness of 6 to 20 µm.

In several examples, the positive electrode active material may include a lithium transition metal oxide. The lithium transition metal oxide may include, for example, one or more selected from the group consisting of Liₓ₁CoO₂(0.5<x1<1.3), Liₓ₂NiO₂(0.5<x2<1.3), Liₓ₃MnO₂(0.5<x3<1.3), Liₓ₄Mn₂O₄(0.5<x4<1.3), Liₓ₅(Niₐ₁Co_{b1}Mn_{c1})O₂(0.5<x5<1.3, 0<a1<1, 0<b1<1, 0<c1<1, a1+b1+c1=1), Liₓ₆Ni_{1-y1}Co_{y1}O₂(0.5<x6<1.3, 0<y1<1), Liₓ₇Co_{1-y2}Mn_{y2}O₂(0.5<x7<1.3, 0≤y2<1), Liₓ₈Ni_{1-y3}Mn_{y3}O₂(0.5<x8<1.3, 0≤y3<1), Liₓ₉(Niₐ₂Co_{b2}Mn_{c2})O₄(0.5<x9<1.3, 0<a2<2, 0<b2<2, 0<c2<2, a2+b2+c2=2), Liₓ₁₀Mn_{2-z1}Ni_{z1}O₄(0.5<x10<1.3, 0<z1<2), Liₓ₁₁Mn_{2-z2}Co_{z2}O₄(0.5<x11<1.3, 0<z2<2), Liₓ₁₂CoPO₄(0.5<x12<1.3) and Liₓ₁₃FePO₄(0.5<x13<1.3).

In several examples, the conductive material used for the positive electrode may be identical to or different from the conductive material used for the negative electrode.

In several examples, the positive electrode binder may be identical to or different from the negative electrode binder.

### Separator

A separator according to the present disclosure may be composed of a porous substrate, or may include a porous substrate and a coating layer.

The porous substrate according to the present disclosure is one capable of providing a movement path of lithium ions while preventing a short circuit by electrically insulating a negative electrode and a positive electrode, and may be a porous structure having high resistance regarding an electrolyte solution and having a fine diameter of pores.

In several examples, as a constituent material of the porous substrate, an organic material or an inorganic material having electrical insulation may be used without being particularly limited. The porous substrate may include, for example, at least any one selected from the group consisting of polyolefin, polyethylene terephthalate, polybutylene terephthalate, polyacetal, polyamide, polycarbonate, polyimide, polyetheretherketone, polyethersulphone, polyphenyleneoxide, polyphenylenesulfide, and polyethylenenaphthalate, and specifically may include polyolefin. Polyolefin not only has excellent coatability but also can increase capacity per volume by increasing a ratio of an electrode active material layer in a battery by making a thickness of a separator thin.

In several examples, a weight average molecular weight (Mw) of the polyolefin may be 100,000 to 500,000 g/mol. When the weight average molecular weight of the polyolefin is less than the numerical range, it may become difficult to secure sufficient mechanical properties, and when it exceeds the numerical range, a shut-down function may not be implemented or molding may become difficult. The shut-down function means a function of blocking movement of ions and preventing thermal runaway of a battery by closing pores of a porous substrate as a thermoplastic resin melts when a temperature of a secondary battery becomes high.

In several examples, a thickness of the porous substrate may be, for example, 3 to 50 µm or 4 to 30 µm. When the thickness of the porous substrate is less than the numerical range, a function of a conductive barrier may not be sufficient, and when it exceeds the numerical range, resistance of a separator may excessively increase.

In several examples, an average diameter of pores included in the porous substrate may be, for example, 10 to 100 nm. Pores included in the porous substrate have a structure connected to each other, so that a gas or a liquid can pass from one surface to another surface of the porous substrate.

A separator according to another embodiment of the present disclosure may include a coating layer disposed on at least one surface of the porous substrate, which can improve mechanical strength and heat resistance of a separator for a secondary battery and can increase ion conductivity in a secondary battery.

A coating layer according to the present disclosure may include a binder polymer and inorganic particles.

A binder polymer according to the present disclosure connects between inorganic particles and can stably fix the same. The binder polymer may be used, for example, by mixing one type or two or more types selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, poly(ethylene-co-vinyl acetate), polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxymethyl cellulose, acrylonitrile-styrene butadiene copolymer, polyimide, and styrene-butadiene rubber.

According to another embodiment of the present disclosure, a weight ratio of the inorganic particles and the binder polymer (inorganic particles:binder polymer) may be 50:50 to 99:1, and specifically may be 70:30 to 95:5. When a content ratio of the inorganic particles to the binder polymer is less than the numerical range, a performance for improving thermal safety of a separator may be degraded as a content of the binder polymer becomes large, and a decrease in performance of a final battery may be caused as pore size and porosity decrease due to a decrease in empty spaces formed between inorganic particles, and when it exceeds the numerical range, peeling resistance of a coating layer may be weakened as the content of the binder polymer is too small.

Inorganic particles according to the present disclosure may contribute to improving mechanical strength and heat resistance of a separator for a secondary battery. Specifically, the inorganic particles are not particularly limited as long as they are electrochemically stable. That is, the inorganic particles usable in the present disclosure are not particularly limited as long as an oxidation and/or reduction reaction does not occur in an operating voltage range of an applied secondary battery (for example, 0 to 5 V based on Li/Li⁺). As an example, in a case of using inorganic particles having a high dielectric constant as the inorganic particles, ion conductivity of an electrolyte solution may be improved by contributing to an increase in a degree of dissociation of an electrolyte salt, for example, a lithium salt, in a liquid electrolyte.

Due to the above-described reasons, the inorganic particles may be inorganic particles having a dielectric constant of 5 or more, inorganic particles having lithium ion delivery ability, or a mixture thereof.

In several examples, the inorganic particles having the dielectric constant of 5 or more may be one type or a mixture of two or more types selected from the group consisting of Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃(PZT, where 0 <x<1), Pb₁₋ₓLaₓZr_{1-y}Ti_{y}O₃ (PLZT, where 0 < x < 1, 0 < y < 1), (1-x)Pb(Mg_{1/3}Nb_{2/3})O₃₋ₓPbTiO₃ (PMN-PT, where 0 < x < 1), HfO₂, SrTiO₃, SnO₂, CeO₂, MgO, NiO, CaO, ZnO, and SiC.

In several examples, the inorganic particles having the lithium ion delivery capability may be one type or a mixture of two or more types selected from the group consisting of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} series glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ series glass (LiₓSi_{y}S_{z}, 0<x<3, 0<y<2, 0<z<4), and P₂S₅ series glass (LiₓP_{y}S_{z}, 0<x<3, 0<y<3, 0<z<7).

In several examples, an average particle diameter (D₅₀) of the inorganic particles may be 1 nm to 10 µm for formation of a coating layer of uniform thickness and proper porosity, and specifically may be 10 nm to 2 µm, and more specifically may be 50 nm to 1 µm. The "average particle diameter (D₅₀)" means a particle diameter at a 50% point of a cumulative distribution of the number of particles according to particle diameter. The average particle diameter may be measured using a laser diffraction method. Specifically, after dispersing a powder to be measured in a dispersion medium, this is introduced into a commercially available laser diffraction particle size measuring device (e.g., Microtrac S3500) to measure a difference in diffraction patterns according to particle size when particles pass through a laser beam, and thus a particle size distribution may be calculated.

In several examples, a thickness of the coating layer may be 0.1 to 10 µm, specifically 1 to 3 µm, and more specifically 1.4 to 1.6 µm. When the thickness of the coating layer satisfies the numerical range, insulation and thermal stability of a separator may be increased and at the same time, energy density of a battery may be improved.

### Electrolyte solution

An electrolyte solution according to the present disclosure may include a solvent and a lithium salt.

The solvent according to the present disclosure may be, for example, one type or a mixture of two or more types selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone, ethyl methyl carbonate (EMC), gamma-butyrolactone (GBL), fluoroethylene carbonate (FEC), methyl formate, ethyl formate, propyl formate, methyl acetate, ethyl acetate, propyl acetate, pentyl acetate, methyl propionate, ethyl propionate, ethyl propionate and butyl propionate.

A lithium salt according to the present disclosure may comprise, for example, anions such as NO₃⁻, F⁻, Cl⁻, Br⁻, I⁻, PF₆⁻, and the like.

A secondary battery according to the present disclosure may be a cylindrical, prismatic, or pouch-type secondary battery, but is not particularly limited as long as it corresponds to a charging/discharging device.

In this specification, an initial coulombic efficiency, a specific capacity, and a capacity retention of a half-cell may be measured by performing a formation process by performing a cycle of charging in a constant current (CC)/constant voltage (CV) method at a charging rate of 0.5 C until a voltage reaches 0.05 V (vs. Li) and discharging at a 1.5 V cut-off at a discharging rate of 0.5 C, and then performing a 100-cycle test by repeating charging in a CC/CV method at 0.5 C until reaching 0.05 V and discharging at 1.5 V at 0.5 C.

In several embodiments of the present disclosure, the initial coulombic efficiency of the half-cell may be 80% or more, 81% or more, 82% or more, 83% or more, 84% or more, 85% or more, 86% or more, 87% or more, 88% or more, 89% or more, 90% or more, 91% or more, or 92% or more, and may be in a range from any one of the plurality of lower limits to 100%.

In several embodiments of the present disclosure, the specific capacity of the half-cell may be 380 mAh/g or more, 400 mAh/g or more, 408 mAh/g or more, or 430 mAh/g or more.

In several embodiments of the present disclosure, the capacity retention of the half-cell may be 87% or more, 88% or more, 89% or more, 90% or more, 91% or more, 92% or more, 93% or more, 94% or more, 95% or more, 96% or more, 97% or more, 98% or more, 99% or more, or 100%.

Another embodiment of the present disclosure may provide a battery module including the secondary battery as a unit cell and a battery pack including the same. The battery pack may be used as a power source for one or more types of medium-to-large-sized devices selected from the group consisting of, for example, a power tool; an electric vehicle including an electric vehicle (EV), a hybrid electric vehicle (HEV), and a plug-in hybrid electric vehicle (PHEV); or a system for power storage.

Hereinafter, embodiments of the present disclosure will be described in detail so that those skilled in the art to which the present disclosure pertains can easily carry them out, but this is only one example, and the scope of rights of the present disclosure is not limited by the following details.

### [Manufacturing Example 1: Manufacture of silicon negative electrode active material]

### <Examples 1 to 13: Silicon negative electrode active material in which carbon content is controlled>

### Step of preparing a silicon nanoparticle dispersion:

Silicon nanoparticles having an average particle diameter (D₅₀) of 120 nm were added to a dispersion medium (ethanol) to prepare a silicon nanoparticle dispersion in which a content of silicon nanoparticles is 10 wt%.

### Step of preparing a first mixture:

A pitch powder having an average particle diameter (D₅₀) of 5 µm and a solvent (tetrahydrofuran, THF) were mixed at a weight ratio of 2:8 to prepare a first mixture.

### Step of spray-drying after stirring the silicon nanoparticle dispersion and the first mixture:

A second mixture in which the silicon nanoparticle dispersion and the first mixture were mixed was stirred at 3,000 rpm for 120 minutes to manufacture a third mixture. The third mixture was spray-dried with hot air of 85°C to manufacture a preliminary silicon negative electrode active material in which silicon particles and pitch were granulated.

### Step of manufacturing a silicon negative electrode active material by performing a heat treatment process and a chemical vapor deposition method on the preliminary silicon negative electrode active material:

Under an inert atmosphere and a chamber of 800°C, the preliminary silicon negative electrode active material particles were heat-treated at a heat treatment temperature described in Table 1 below for a heat treatment time of Table 1 below to induce carbonization of pitch. Simultaneously with the heat treatment method, a chemical vapor deposition method of inputting acetylene gas for the heat treatment time described in Table 1 below was performed to finally manufacture a silicon negative electrode active material.

### <Comparative Examples: silicon negative electrode active material in which carbon content is not controlled>

### <Comparative Examples 1 to 3: in case where ratio of carbon content of silicon negative electrode active material is less than 20 wt%>

### Comparative Examples 1 and 2:

A silicon negative electrode active material was manufactured in the same method as in Example 1, but by changing a heat treatment time of the heat treatment process and a chemical vapor deposition process to 100 minutes (Comparative Example 1) and 120 minutes (Comparative Example 2), silicon negative electrode active materials according to Comparative Examples 1 and 2 were manufactured, respectively.

### Comparative Example 3:

A silicon negative electrode active material was manufactured in the same method as in Example 1, but by changing a heat treatment temperature of the heat treatment process and a chemical vapor deposition process to 830°C and a heat treatment time to 120 minutes, a silicon negative electrode active material of Comparative Example 3 was manufactured.

### <Comparative Examples 4 and 5: in case where ratio of carbon content of silicon negative electrode active material exceeds 60 wt%>

A silicon negative electrode active material was manufactured in the same method as in Example 1, but by changing a heat treatment time of the heat treatment process and a chemical vapor deposition process to 500 minutes (Comparative Example 4) and 600 minutes (Comparative Example 5), silicon negative electrode active materials according to Comparative Examples 4 and 5 were manufactured, respectively.

### [Experimental Example 1: Method for measuring parameters regarding silicon negative electrode active material]

With reference to FIG. 1, based on a midpoint on a major axis of a cross-section where a silicon negative electrode active material 100 manufactured by a method according to the Manufacturing Example 1 is cut, the silicon negative electrode active material 100 may include a first region R1 having a radius of 0 or more and 1/3 or less, a second region R2 having a radius of more than 1/3 and 2/3 or less, and a third region R3 having a radius of more than 2/3 and 3/3 or less. Here, the midpoint on the major axis L may be a center point when assuming that the silicon negative electrode active material is spherical.

A ratio of carbon content (C₀) of a silicon negative electrode active material described in Table 1 below may be calculated by Equation 1 below, a ratio of carbon content (C₁) of the first region R1 by Equation 2 below, a ratio of carbon content (C₂) of the second region R2 by Equation 3 below, and a ratio of carbon content (C₃) of the third region R3 by Equation 4 below. In this case, in Equations 1 to 4 below, each silicon content (unit: wt%) and carbon content (unit: wt%) may be measured using an energy-dispersive X-ray spectroscopy (EDS) analysis equipment of AMETECH Company.${C}_{0} = \left\{B/\left(A+B\right)\right\} x 100$

In Equation 1 above, A is a silicon content of the silicon negative electrode active material, and B is a carbon content of the silicon negative electrode active material.${C}_{1} = \left\{B1/\left(A1+B1\right)\right\} x 100$

In Equation 2 above, A1 is a silicon content of the first region, and B1 is a carbon content of the first region.${C}_{2} = \left\{B2/\left(A2+B2\right)\right\} x 100$

In Equation 3 above, A2 is a silicon content of the second region, and B2 is a carbon content of the second region.${C}_{3} = \left\{B3/\left(A3+B3\right)\right\} x 100$

In Equation 4 above, A3 is a silicon content of the third region, and B3 is a carbon content of the third region.

**[Table 1]**

| Classificati on | Heat treatment temperature (°C) | Heat treatment time (min) | Ratio of carbon content of silicon negative electrode active material (C₀, wt%) | First region (C₁, wt%) | Second region (C₂, wt%) | Third region (C₃, wt%) |
|---|---|---|---|---|---|---|
| Example 1 | 800 | 150 | 20.62 | 10.61 | 15.96 | 22.37 |
| Example 2 | 800 | 180 | 29.16 | 15.03 | 25.06 | 31.92 |
| Example 3 | 800 | 240 | 31.33 | 18.97 | 27.24 | 34.05 |
| Example 4 | 800 | 300 | 34.89 | 34.33 | 34.54 | 34.84 |
| Example 5 | 830 | 300 | 35.27 | 16.55 | 25.01 | 39.02 |
| Example 6 | 800 | 360 | 43.82 | 43.64 | 43.75 | 43.94 |
| Example 7 | 830 | 360 | 44.47 | 35.22 | 39.91 | 46.70 |
| Example 8 | 850 | 360 | 44.51 | 20.06 | 31.65 | 50.03 |
| Example 9 | 930 | 360 | 44.75 | 17.81 | 22.94 | 56.80 |
| Example 10 | 900 | 360 | 44.94 | 15.21 | 35.58 | 50.46 |
| Example 11 | 800 | 440 | 47.54 | 46.34 | 46.55 | 47.81 |
| Example 12 | 830 | 440 | 48.16 | 25.38 | 38.91 | 53.09 |
| Example 13 | 800 | 480 | 59.20 | 31.86 | 49.02 | 64.86 |
| Comparativ e Example 1 | 800 | 100 | 10.51 | 5.16 | 8.68 | 11.76 |
| Comparativ e Example 2 | 800 | 120 | 18.43 | 17.75 | 15.40 | 19.50 |
| Comparativ e Example 3 | 830 | 120 | 18.96 | 12.30 | 18.92 | 22.11 |
| Comparativ e Example 4 | 800 | 500 | 61.33 | 33.73 | 51.44 | 66.04 |
| Comparativ e Example 5 | 800 | 600 | 70.79 | 45.67 | 55.87 | 74.03 |

In the Table 1, it can be confirmed that as a heat treatment time increases, as a content of a carbon material penetrating into pores of silicon negative electrode active material particles through heat treatment and chemical vapor deposition becomes high, a carbon content of a silicon negative electrode active material increases.

In addition, a carbon content inside a silicon negative electrode active material may be adjusted by adjusting a heat treatment temperature, and it can be confirmed that when a heat treatment temperature is increased, a carbon content of an outer region becomes high compared to a carbon content of an inner region. Specifically, it can be confirmed that as a heat treatment temperature is increased in Examples 6 to 10, a difference (R3-R2) between a carbon content of the third region R3 and a carbon content of the second region R2 and a difference (R2-R1) between a carbon content of the second region R2 and a carbon content of the first region R1 become large.

### [Experimental Example 2: Measurement of specific surface area of silicon negative electrode active material]

After adsorbing nitrogen gas to each silicon negative electrode active material manufactured by a method according to the Manufacturing Example 1, a BET specific surface area of the silicon negative electrode active material was analyzed by measuring an amount of the adsorbed nitrogen gas.

**[Table 2]**

| Classificatio n | Heat treatment temperatur e (°C) | Heat treatment time (min) | Ratio of carbon content of silicon negative electrode active material (C₀, wt%) | First region (C₁, wt%) | Second region (C₂, wt%) | Third region (C₃, wt%) | BET (ₘ²_{/g}) |
|---|---|---|---|---|---|---|---|
| Example 1 | 800 | 150 | 20.62 | 10.61 | 15.96 | 22.37 | 9.92 |
| Example 2 | 800 | 180 | 29.16 | 15.03 | 25.06 | 31.92 | 8.84 |
| Example 3 | 800 | 240 | 31.33 | 18.97 | 27.24 | 34.05 | 4.69 |
| Example 4 | 800 | 300 | 34.89 | 34.33 | 34.54 | 34.84 | 1.95 |
| Example 5 | 830 | 300 | 35.27 | 16.55 | 25.01 | 39.02 | 1.73 |
| Example 6 | 800 | 360 | 43.82 | 43.64 | 43.75 | 43.94 | 0.79 |
| Example 7 | 830 | 360 | 44.47 | 35.22 | 39.91 | 46.70 | 0.66 |
| Example 8 | 850 | 360 | 44.51 | 20.06 | 31.65 | 50.03 | 0.58 |
| Example 9 | 930 | 360 | 44.75 | 17.81 | 22.94 | 56.80 | 0.66 |
| Example 10 | 900 | 360 | 44.94 | 15.21 | 35.58 | 50.46 | 0.83 |
| Example 11 | 800 | 440 | 47.54 | 46.34 | 46.55 | 47.81 | 0.69 |
| Example 12 | 830 | 440 | 48.16 | 25.38 | 38.91 | 53.09 | 0.67 |
| Example 13 | 800 | 480 | 59.20 | 31.86 | 49.02 | 64.86 | 0.64 |
| Comparative Example 1 | 800 | 100 | 10.51 | 5.16 | 8.68 | 11.76 | 15.88 |
| Comparative Example 2 | 800 | 120 | 18.43 | 17.75 | 15.40 | 19.50 | 13.64 |
| Comparative Example 3 | 830 | 120 | 18.96 | 12.30 | 18.92 | 22.11 | 11.96 |
| Comparative Example 4 | 800 | 500 | 61.33 | 33.73 | 51.44 | 66.04 | 0.59 |
| Comparative Example 5 | 800 | 600 | 70.79 | 45.67 | 55.87 | 74.03 | 0.54 |

In the Table 2, it can be confirmed that as a heat treatment time increases, a carbon content of a silicon negative electrode active material increases and a specific surface area decreases. This means that as a carbon material is laminated in pores of silicon negative electrode active material particles through heat treatment and chemical vapor deposition, as a heat treatment time increases, a specific surface area of a silicon negative electrode active material decreases.

In addition, in a case of a silicon negative electrode active material manufactured to have a concentration gradient having a low carbon content toward a center direction when a total carbon content is similar, it can be confirmed that a carbon content is similar but a specific surface area decreases. This can be inferred that when a heat treatment temperature increases, carbon is relatively more laminated on a surface, so that a specific surface area becomes lower compared to a negative electrode active material having a similar content.

### [Experimental Example 3: Morphology analysis regarding pores of silicon negative electrode active material]

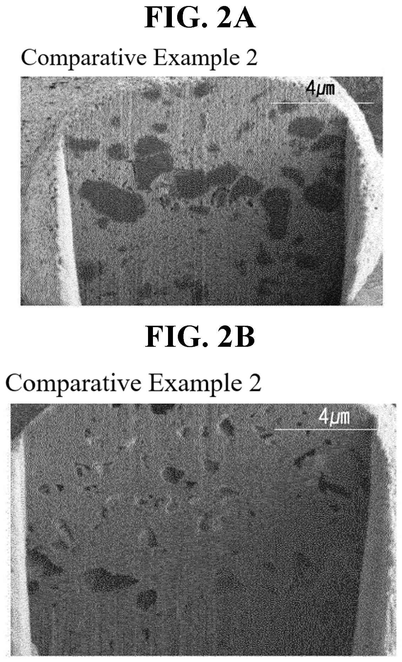

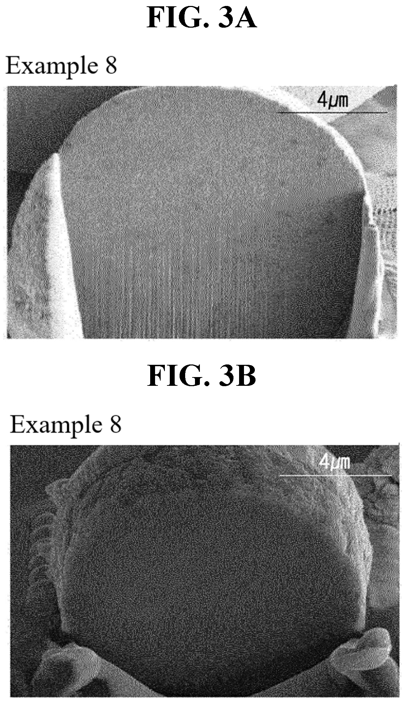

FIG. 2A is a focused ion beam (FIB)-scanning electron microscope (SEM) photograph of a silicon negative electrode active material before heat treatment in a method according to Comparative Example 2. FIG. 2B is an FIB-SEM photograph of a silicon negative electrode active material after heat treatment in a method according to Comparative Example 2. FIG. 3A is an FIB-SEM photograph of a silicon negative electrode active material before heat treatment in a method according to Example 8. FIG. 3B is an FIB-SEM photograph of a silicon negative electrode active material after heat treatment in a method according to Example 8.

With reference to FIG. 2A, FIG. 2B, FIG. 3A, and FIG. 3B, it can be confirmed that in a silicon negative electrode active material manufactured by a method according to Example 8, compared to Comparative Example 2, a pore does not exist.

### [Experimental Example 4: Evaluation of electrochemical performance of half-cell]

### Manufacture of a half-cell sample:

A negative electrode slurry having a total solid content of 50 wt% was manufactured by mixing graphite, a negative electrode active material manufactured in the Manufacturing Example 1, carboxymethyl cellulose (CMC), and styrene-butadiene rubber (SBR) at a weight ratio of 87:10:1.5:1.5 and adding a solvent (H₂O) to adjust viscosity. After coating the manufactured negative electrode slurry on a current collector (copper foil) having a thickness of 18 µm, drying at 90 °C for 60 minutes, and adjusting to a mixture density of 1.0 g/cc using a roll press, a negative electrode (thickness: 40 µm) was manufactured by drying at 90 °C for 24 hours in a vacuum oven. Li metal was used as a counter electrode, a separator made of a polyethylene material (thickness: 80 µm) was used as a separator, and an electrolyte solution was injected to manufacture a half-cell. In this case, as the electrolyte solution, an electrolyte solution in which 10 wt% of fluoroethylene carbonate (FEC) as an additive and 1M of LiPF₆ were dissolved in a mixed solvent in which ethylene carbonate (EC) and diethyl carbonate (DEC) were mixed at a volume ratio of 1:1 was used.

### Evaluation method:

Regarding the manufactured half-cell, an initial coulombic efficiency was measured with a current amount of 0.1 C, and a capacity retention was evaluated with a current amount of 0.5 C. Specifically, a formation process was performed by performing a cycle of charging in a constant current (CC)/constant voltage (CV) method at a charging rate of 0.5 C until a voltage reaches 0.05 V (vs. Li) and discharging at a 1.5 V cut-off at a discharging rate of 0.5 C. Subsequently, a specific capacity, an initial coulombic efficiency, and a capacity retention up to 100 cycles were measured by repeating charging in a CC/CV method at 0.5 C until reaching 0.05 V and discharging at 1.5 V at 0.5 C.

**[Table 3]**

| Classificati on | Ratio of carbon content of silicon negative electrode active material (C₀, wt%) | First region (C₁, wt%) | Second region (C₂, wt%) | Third region (C₃, wt%) | ICE (%) | Specific capacity (mAh/g) | Capacity retention (%) (@100cyc le) |
|---|---|---|---|---|---|---|---|
| Example 1 | 20.62 | 10.61 | 15.96 | 22.37 | 82.2 | 510 | 87 |
| Example 2 | 29.16 | 15.03 | 25.06 | 31.92 | 83.7 | 491 | 88.9 |
| Example 3 | 31.33 | 18.97 | 27.24 | 34.05 | 85.5 | 484 | 91.1 |
| Example 4 | 34.89 | 34.33 | 34.54 | 34.84 | 86.5 | 470 | 93.3 |
| Example 5 | 35.27 | 16.55 | 25.01 | 39.02 | 87 | 476 | 94.7 |
| Example 6 | 43.82 | 43.64 | 43.75 | 43.94 | 90.9 | 443 | 96.9 |
| Example 7 | 44.47 | 35.22 | 39.91 | 46.70 | 90.2 | 447 | 98.8 |
| Example 8 | 44.51 | 20.06 | 31.65 | 50.03 | 92.1 | 452 | 100 |
| Example 9 | 44.75 | 17.81 | 22.94 | 56.80 | 90.2 | 444 | 97.9 |
| Example 10 | 44.94 | 15.21 | 35.58 | 50.46 | 89.7 | 445 | 98.1 |
| Example 11 | 47.54 | 46.34 | 46.55 | 47.81 | 85.8 | 435 | 93.5 |
| Example 12 | 48.16 | 25.38 | 38.91 | 53.09 | 86.3 | 442 | 93.8 |
| Example 13 | 59.20 | 31.86 | 49.02 | 64.86 | 84.3 | 408 | 92.3 |
| Comparativ e Example 1 | 10.51 | 5.16 | 8.68 | 11.76 | 74.3 | 530 | 82 |
| Comparativ e Example 2 | 18.43 | 17.75 | 15.40 | 19.50 | 75.5 | 511 | 84.5 |
| Comparativ e Example 3 | 18.96 | 12.30 | 18.92 | 22.11 | 78.5 | 519 | 84.8 |
| Comparativ e Example 4 | 61.33 | 33.73 | 51.44 | 66.04 | 79.2 | 376 | 87.1 |
| Comparativ e Example 5 | 70.79 | 45.67 | 55.87 | 74.03 | 76.4 | 334 | 82.4 |

With reference to the Table 3, comparing Examples 1 to 13 and Comparative Examples 1 to 5 from a viewpoint of simultaneously improving initial coulombic efficiency, specific capacity, and capacity retention of a secondary battery according to a carbon content of a silicon negative electrode active material, as a carbon content of a silicon negative electrode active material satisfies 20 to 60 wt%, initial coulombic efficiency and capacity retention of a secondary battery may be significantly improved. If the carbon content of the silicon negative electrode active material is less than the numerical range, a specific capacity of a secondary battery may become high, but a problem in which initial coulombic efficiency and capacity retention are significantly low may occur. If the carbon content of the silicon negative electrode active material exceeds the numerical range, a problem in which initial coulombic efficiency and specific capacity of a secondary battery significantly decrease may occur.

With reference to the Table 3, comparing Examples 1 to 13 with each other from a viewpoint of simultaneously improving initial coulombic efficiency, specific capacity, and capacity retention of a secondary battery according to a carbon content of a silicon negative electrode active material, as a carbon content of a silicon negative electrode active material satisfies 30 to 45 wt%, it can be confirmed that initial coulombic efficiency, specific capacity, and capacity retention of a secondary battery further increase.

In addition, as in Comparative Example 2, in a case where there is no carbon around silicon, asymmetry of expansion is induced, so that asymmetric stress is continuously induced during continuous cycling, and thus a phenomenon in which secondary particles are broken may occur. However, in a case where a carbon content in a silicon negative electrode active material has continuity, such a phenomenon can be effectively prevented.

In addition, as in Examples 1 to 13, as a carbon content becomes lower with increasing depth in a direction from a surface toward a center of the silicon negative electrode active material, a high volume expansion rate of a surface compared to an inside during volume expansion of a silicon negative electrode active material due to insertion/extraction of lithium ions during a charging/discharging process of a secondary battery can be more effectively suppressed, and accordingly, initial coulombic efficiency, specific capacity, and capacity retention of a secondary battery can be further improved.

### [Experimental Example 5: Morphology of silicon negative electrode active material after 100 cycles]

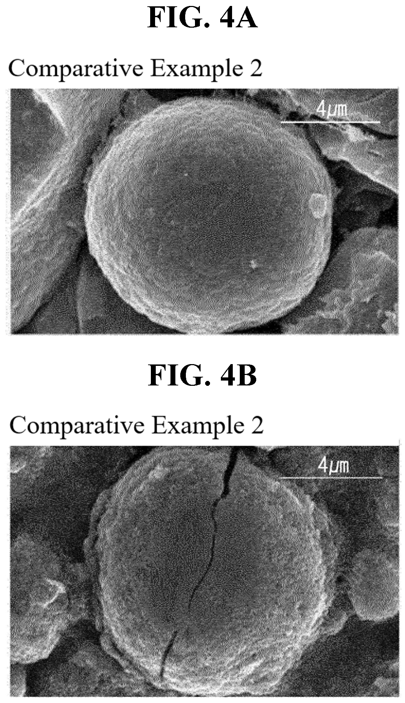

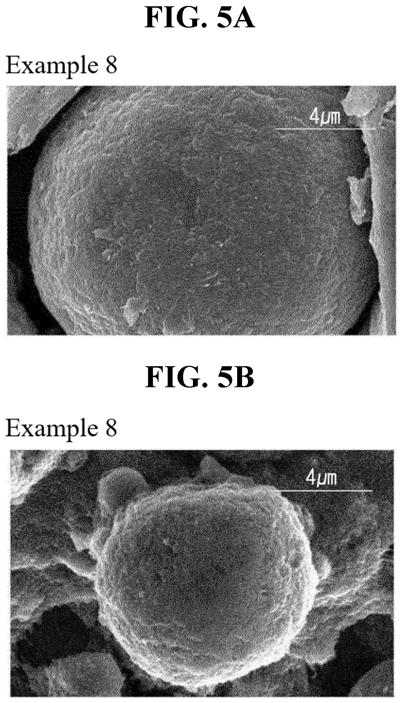

FIG. 4A is an SEM photograph of a surface of a silicon negative electrode active material before 100 cycles in a method according to Comparative Example 2. FIG. 4B is an SEM photograph of a surface of a silicon negative electrode active material after 100 cycles in a method according to Comparative Example 2. FIG. 5A is an SEM photograph of a surface of a silicon negative electrode active material before 100 cycles in a method according to Example 8. FIG. 5B is an SEM photograph of a surface of a silicon negative electrode active material after 100 cycles in a method according to Example 8.

With reference to FIG. 4A, FIG. 4B, FIG. 5A, and FIG. 5B, a silicon negative electrode active material manufactured by a method according to Example 8 exhibited an effect of having no crack on a surface as a carbon content in a negative electrode active material is controlled, compared to Comparative Example 2. On the other hand, after 100 cycles, a crack was observed on a surface of a silicon negative electrode active material of Comparative Example 2.

### [Experimental Example 6: Continuity analysis of ratio of carbon content]

In order to confirm a uniform mixed phase of carbon, a negative electrode active material of Example 8 was used as a sample. Specifically, a cross-section of a silicon negative electrode active material of Example 8 having an average particle diameter of 15 µm was cut using a focused ion beam (FIB) and then measured with an SEM. In the same method, a negative electrode active material of Comparative Example 2 having an average particle diameter of 15 µm was used as a sample and measured. As a result of measurement, in a sample of Comparative Example 2, 10 or more pores having a long side of 300 nm were observed, and in a sample of Example 8, a pore having a long side of 300 nm was not observed.

**[Table 4]**

| Classification | Ratio of carbon content (C₀) | Observation of 300 nm pore |
|---|---|---|
| Example 8 | Continuity | Not observed |
| Comparative Example 2 | Discontinuity | 10 observed |

Although the preferred embodiments of the present disclosure have been described in detail above, the scope of rights of the present disclosure is not limited thereto, and various modifications and improvements by those skilled in the art using the basic concept of the present disclosure defined in the following claims also fall within the scope of rights of the present disclosure.

### [Description of Reference Numerals]

R1: First region
R2: Second region
R3: Third region
100: Silicon negative electrode active material

## Claims

1. A silicon negative electrode active material, comprising:
silicon particles; and
a carbon material on the silicon particles,
wherein a ratio of carbon content (C₀) of the silicon negative electrode active material satisfies Equation 1 below: $20 wt % \leq {C}_{0} = \left\{B/\left(A+B\right)\right\} x 100 \leq 60 wt %$
in Equation 1 above, A is a silicon content of the silicon negative electrode active material, and B is a carbon content of the silicon negative electrode active material.

2. The silicon negative electrode active material of claim 1, wherein the ratio of carbon content of the silicon negative electrode active material is 30 wt% or more and 45 wt% or less.

3. The silicon negative electrode active material of claim 1, wherein the ratio of carbon content of the silicon negative electrode active material is 35 wt% or more and 45 wt% or less.

4. The silicon negative electrode active material of claim 1, wherein a pore having a long side of a size of 300 nm or more does not exist in a cross-section where the silicon negative electrode active material is cut.

5. The silicon negative electrode active material of claim 1, wherein the silicon negative electrode active material comprises,
based on a midpoint on a major axis of a cross-section where the silicon negative electrode active material is cut,
a first region having a radius of 0 or more and 1/3 or less,
a second region having a radius of more than 1/3 and 2/3 or less, and
a third region having a radius of more than 2/3 and 3/3 or less, and
ratios of carbon content of each of the first to third regions are identical to or different from each other.

6. The silicon negative electrode active material of claim 1, wherein the silicon negative electrode active material comprises,
based on a midpoint on a major axis of a cross-section where the silicon negative electrode active material is cut,
a first region having a radius of 0 or more and 1/3 or less,
a second region having a radius of more than 1/3 and 2/3 or less, and
a third region having a radius of more than 2/3 and 3/3 or less, and
in each of the regions, a difference between each carbon content of arbitrary two points included in a unit area of 100 nm² is an absolute value of 10% or less.

7. The silicon negative electrode active material of claim 5, wherein the ratios of carbon content of each of the first to third regions are different from each other.

8. The silicon negative electrode active material of claim 5, wherein the ratio of carbon content of the first region is lower than the ratio of carbon content of the second region.

9. The silicon negative electrode active material of claim 5, wherein the ratio of carbon content of the first region is lower than the ratio of carbon content of the third region.

10. The silicon negative electrode active material of claim 5, wherein the ratio of carbon content of the second region is lower than the ratio of carbon content of the third region.

11. The silicon negative electrode active material of claim 1, wherein the ratio of carbon content becomes lower with increasing depth in a direction from a surface toward a center of the silicon negative electrode active material.

12. The silicon negative electrode active material of claim 1, wherein a BET specific surface area of the silicon negative electrode active material is 10 m²/g or less.

13. A negative electrode, comprising the silicon negative electrode active material of claim 1.

14. A secondary battery, comprising:
the negative electrode of claim 13;
a positive electrode;
a separator interposed between the negative electrode and the positive electrode; and
an electrolyte solution.
